(19) **Europäisches Patentamt**
**European Patent Office**
**Office européen des brevets**

(11) **EP 4 667 989 A1**

(12) **EUROPEAN PATENT APPLICATION**
published in accordance with Art. 153(4) EPC

(43) Date of publication:
**24.12.2025 Bulletin 2025/52**

(21) Application number: **24756601.1**

(22) Date of filing: **25.01.2024**

(51) International Patent Classification (IPC):
**G02B 6/36** (2006.01)     **G02B 6/02** (2006.01)
**G02B 6/26** (2006.01)

(52) Cooperative Patent Classification (CPC):
**G02B 6/02; G02B 6/26; G02B 6/36**

(86) International application number:
**PCT/JP2024/002292**

(87) International publication number:
**WO 2024/171750 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.02.2023 JP 2023023493**

(71) Applicants:
• **Sumitomo Electric Optifrontier Co., Ltd.
Yokohama-shi, Kanagawa 244-8589 (JP)**

• **Sumitomo Electric Industries, Ltd.
Osaka-shi, Osaka 541-0041 (JP)**

(72) Inventors:
• **YAMAZAKI Masayuki
Yokohama-shi, Kanagawa 244-8589 (JP)**
• **SHIGEHARA Masakazu
Osaka-shi, Osaka 541-0041 (JP)**
• **HISHIKAWA Yoshifumi
Yokohama-shi, Kanagawa 244-8589 (JP)**

(74) Representative: **TBK
Bavariaring 4-6
80336 München (DE)**

(54) **TERMINATOR, TERMINAL, AND OPTICAL CONNECTION STRUCTURE**

(57) A terminator according to one embodiment of the present invention is inserted in a hole of a terminal and is optically connected to an optical fiber disposed in the hole. The terminator includes: a filter that, when the terminator is in a state of being inserted in the hole of the terminal, reflects, of light from the terminal, light in a wavelength range including a specific wavelength, and transmits light outside the wavelength range; a ferrule that holds the filter; a plug frame that encompasses the ferrule; and a housing coupled to the plug frame. The housing includes a protruding portion. The protruding portion: enters the hole when a position of the terminator in a rotation direction relative to the terminal is an insertable position; and contacts an inner wall formed inside the hole when the position of the terminator in the rotation direction relative to the terminal is other than the insertable position. The protruding portion crosses over a bump formed inside the hole when entering the hole.

**Fig.6**

**EP 4 667 989 A1**

## Description

### TECHNICAL FIELD

The present disclosure relates to a terminator, a terminal, and an optical connection structure. This application claims priority based on Japanese Patent Application No. 2023-023493 filed on February 17, 2023, the entire contents of which are incorporated herein by reference.

### BACKGROUND ART

Patent literature 1, patent literature 2, and patent literature 3 describe an optical connector that is connected to a device. The optical connector is provided at an end portion of an optical fiber cable. The optical connector extends in the direction in which the optical fiber cable extends. The optical connector includes a housing extending in a longitudinal direction of the optical connector, a ferrule subassembly accommodated in the housing, and a cable adapter connected to the ferrule subassembly.

The optical connector is connected to the device in a state where a position in a rotation direction is aligned with the device. The term "rotation direction" means that a direction in which the optical connector rotates about a central axis that passes through a center of a cross section of the optical connector taken along a plane orthogonal to a longitudinal direction of the optical connector and extends in the longitudinal direction. A cross section of the housing when cut along a plane orthogonal to the longitudinal direction of the optical connector is rectangular. The housing has a keying mechanism for defining a position of the optical connector in a rotation direction with respect to the device, and a locking mechanism for engaging with the device. The locking mechanism has a recessed shape recessed from an outer peripheral surface of a cylindrical portion.

### CITATION LIST

### PATENT LITERATURE

Patent literature 1: WO 2019/005191
Patent literature 2: WO 2019/005194
Patent literature 3: WO 2019/005196

### SUMMARY OF INVENTION

A terminator according to the present disclosure is a terminator configured to be inserted into a slot of a terminal and optically connected to an optical fiber disposed in the slot. The terminator includes a filter configured to reflect light in a wavelength range including a specific wavelength and transmit light outside the wavelength range among light from the optical fiber in a state of being inserted into the slot of the terminal, a ferrule holding the filter, a plug frame enclosing the ferrule, and a housing coupled to the plug frame. The housing has a protruding portion. The protruding portion enters the slot when a position of the terminator in a rotation direction with respect to the terminal is an insertable position, and abuts against an inner wall formed inside the slot when the position of the terminator in the rotation direction with respect to the terminal is a position other than the insertable position. The protruding portion rides over a protrusion formed inside the slot when entering the slot.

### BRIEF DESCRIPTION OF THE DRAWINGS

FIG. 1 is a perspective view of a terminator according to one embodiment.
FIG. 2 is a side view of a terminator according to one embodiment.
FIG. 3 is a cross-sectional view of the terminator of FIG. 2 taken along a line A-A.
FIG. 4 is an enlarged view of the inside of a ferrule of a terminator according to one embodiment.
FIG. 5 is a front view of a terminator according to one embodiment when viewed along the longitudinal direction of a terminator.
FIG. 6 is a diagram for explaining insertion of a terminator into a terminal according to one embodiment.
FIG. 7 is a diagram showing a filter of a terminator according to a modification.

## DETAILED DESCRIPTION

[Problems to be Solved by Present Disclosure]

There are cases where the terminator is required to have a simple structure. In the optical connector described above, the keying mechanism and the locking mechanism are separately provided, and the locking mechanism has the recessed shape recessed from the outer peripheral surface of the cylindrical portion. Thus, there is room for improvement in terms of simplification of the configuration.

[Advantageous Effects of Present Disclosure]

According to the present disclosure, the configuration can be simplified.

[Description of Embodiments of Present Disclosure]

The embodiments of the present disclosure are listed and described. (1) A terminator according to one embodiment is a terminator configured to be inserted into a slot of a terminal and optically connected to an optical fiber disposed in the slot. The terminator includes a filter configured to reflect light in a wavelength range including a specific wavelength and transmit light outside the wavelength range among light from the optical fiber in a state of being inserted into the slot of the terminal, a ferrule holding the filter, a plug frame enclosing the ferrule, and a housing coupled to the plug frame. The housing has a protruding portion. The protruding portion enters the slot when a position of the terminator in a rotation direction with respect to the terminal is an insertable position, and abuts against an inner wall formed inside the slot when the position of the terminator in the rotation direction with respect to the terminal is a position other than the insertable position. The protruding portion rides over a protrusion formed inside the slot when entering the slot.

The terminator has the filter held by the ferrule, and the filter reflects light in the wavelength range including the specific wavelength toward the optical fiber disposed in advance in the terminal. The ferrule is enclosed in the plug frame, and the housing is coupled to the plug frame. The housing has the protruding portion. The protruding portion enters the slot of the terminal when the position of the terminator in the rotation direction with respect to the terminal is the insertable position. Further, the protruding portion abuts against the inner wall formed inside the slot when the position of the terminator in the rotation direction with respect to the terminal is not the insertable position. Thus, the protruding portion can have a function as a key for determining the rotational position of the terminator with respect to the terminal. The protruding portion rides over the protrusion formed inside the slot when entering the slot. The terminator engages with the terminal by the protruding portion riding over the protrusion. Thus, the protruding portion can have a function as a lock for preventing the terminator from coming off the terminal. As described above, since the protruding portion of the housing can have the function as the key and the function as the lock, it is not necessary to separately provide mechanisms for the key and a mechanism for the lock. Thus, the configuration can be simplified.

(2) In the above (1), the housing may have a curved surface portion having an arc shape when viewed along a longitudinal direction of the terminator, and a recessed surface portion recessed with respect to a virtual extension surface extending along the curved surface portion when viewed along the longitudinal direction. The protruding portion may protrude from the recessed surface portion. In this case, the protruding portion protrudes from the recessed surface portion of the housing, thereby reducing the volume of the housing. Thus, the size can be reduced, and the cost of materials or the like can be reduced.

(3) In the above (1) or (2), the plug frame may have an elliptic shape when viewed along a longitudinal direction of the terminator. In this case, the rotational position of the plug frame with respect to the terminal can be easily identified.

(4) In any one of the above (1) to (3), the housing may have a finger contact portion to which a finger is brought into contact. The finger contact portion may cause the position of the terminator in the rotation direction with respect to the terminal to be the insertable position in a state in which the finger is in contact with the finger contact portion. In this case, when the finger is in contact with the finger contact portion, the position of terminator in the rotation direction with respect to the terminal becomes the insertable position. Thus, the terminator can be easily inserted into the terminal.

(5) In the above (4), a direction in which the protruding portion protrudes and a direction in which the finger contact portion is recessed may be same directions.

(6) In any one of the above (1) to (5), the filter may be an optical fiber Bragg grating.

(7) In any one of the above (1) to (5), the filter may be a multilayer filter.

(8) A terminal according to the present disclosure is a terminal configured to be optically connected to a terminator. The terminal includes an optical fiber configured to be optically connected to the terminator, and a slot into which the terminator is inserted. The optical fiber is disposed inside the slot. An inner wall configured to inhibit the terminator from being inserted and a protrusion configured to allow the terminator to be inserted are formed inside the slot. The protrusion is movable in a radial direction of the slot. The protrusion is urged by a spring toward a center of the slot in the radial direction.

(9) An optical connection structure according to the present disclosure includes the terminator described above and the terminal described above optically connected to the terminator.

[Details of Embodiments of Present Disclosure]

Specific examples of a terminator according to an embodiment of the present disclosure will be described below with reference to the drawings. The present disclosure is not limited to these examples, but is defined by the scope of the claims, and is intended to include all modifications within the meaning and scope equivalent to the scope of the claims. In the description of the drawings, the same or corresponding elements are denoted by the same reference numerals, and redundant description will be omitted as appropriate. In the drawings, some components may be simplified or exaggerated for easy understanding, and the dimensional ratios and the like are not limited to those shown in the drawings.

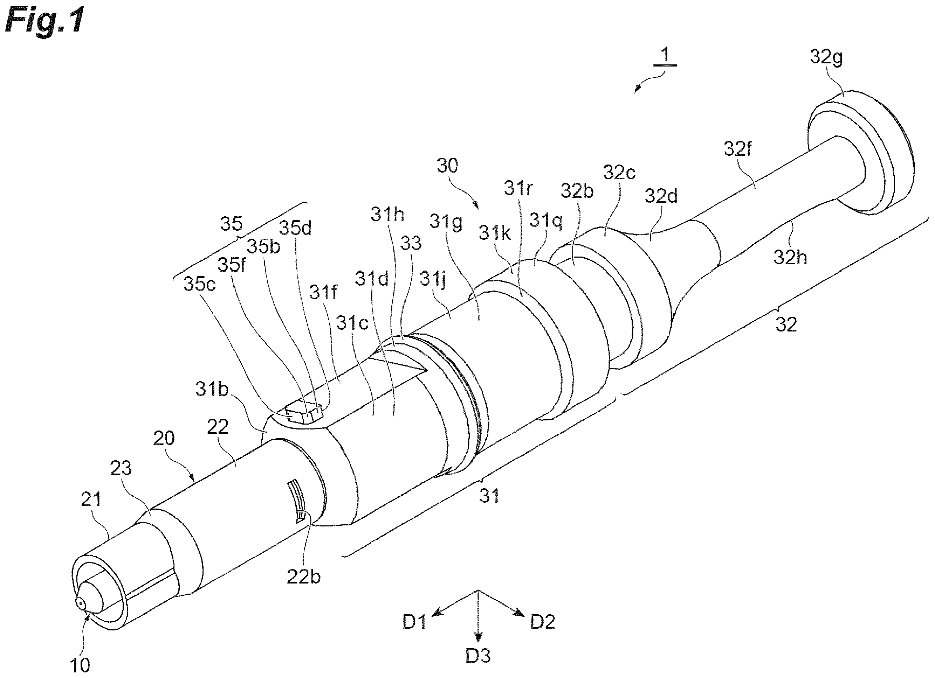

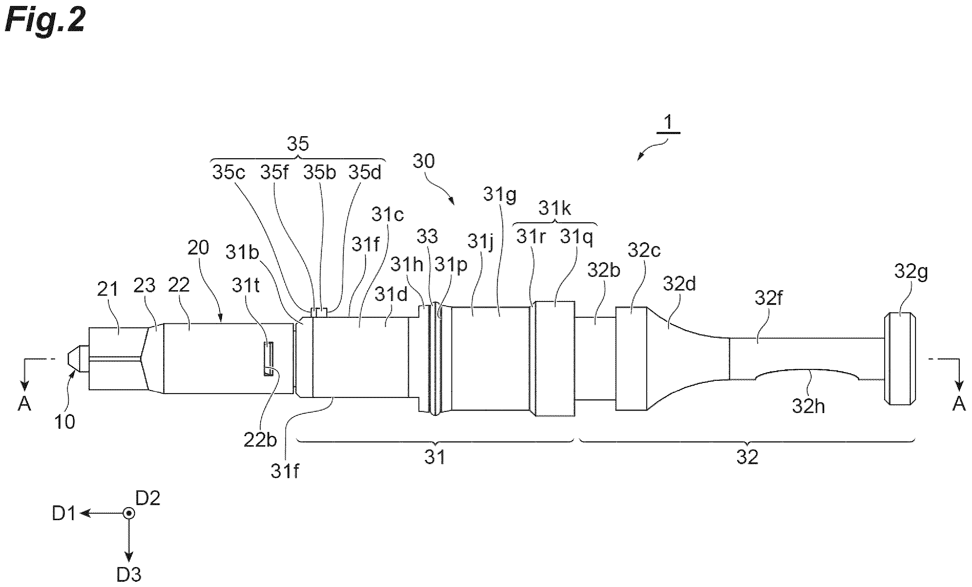

FIG. 1 is a perspective view of a terminator 1 as an example. FIG. 2 is a side view of the terminator 1. As shown in FIGS. 1 and 2, the terminator 1 is substantially rod. The terminator 1 is a high-reflection terminator that is configured to reflect light in a wavelength range including a specific wavelength and transmit light outside the wavelength range. The terminator 1 is also referred to as a reflector. The terminator 1 extends in a first direction D1. The first direction D1 is a longitudinal direction of the terminator 1.

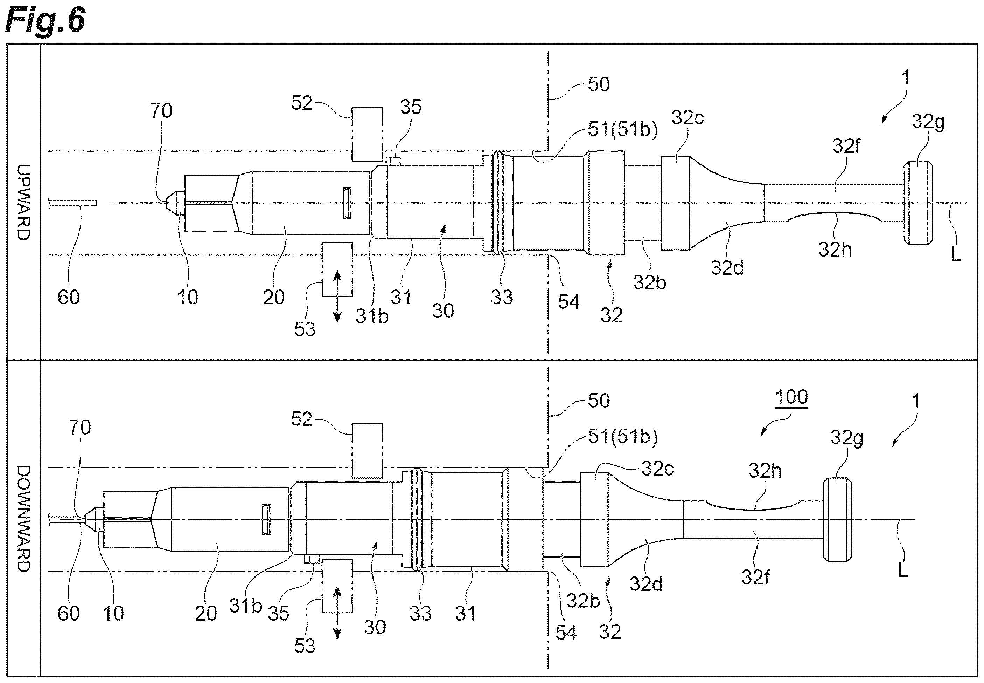

The terminator 1 has a ferrule 10, a plug frame 20 enclosing the ferrule 10, and a housing 30 coupled to the plug frame 20. The plug frame 20 and the housing 30 are made of, for example, resin. The terminator 1 is inserted into a slot 51 (see FIG. 6) of a terminal 50 and connected to the terminal 50. The longitudinal direction is an insertion direction in which the terminator is inserted into the terminal. The terminal 50 is used to connect a specific first optical fiber to a second optical fiber. The terminal 50 is provided outdoors, for example.

In order to connect the specific first optical fiber to the second optical fiber, a first optical fiber 60 (see FIG. 6) extended from upstream equipment is disposed in advance inside the slot 51 of the terminal 50. The first optical fiber 60 is inserted into the slot 51 from the outside (side facing away from the terminal 50) of the slot 51 of the terminal 50. The terminal 50 is provided with an opening 54 communicating with the slot 51. The second optical fiber is inserted into the slot 51 from the opening 54. As a result, the second optical fiber is optically connected to the first optical fiber 60 disposed in the slot 51 of the terminal 50. Usually, in order to facilitate such connection, an adapter structure into which an optical connector attached to an end portion of the optical fiber can be inserted is disposed in the portion of the slot 51 of the terminal 50. This makes it possible to easily connect the optical fiber of the optical connector attached to the end portion of the optical fiber. At this time, the terminator 1 is inserted into the slot 51 where the first optical fiber 60 to which the second optical fiber is not connected is disposed, among the slots where optical fibers disposed in advance in the terminal 50. The terminator 1 is provided to determine whether the optical fiber up to the terminal 50 is sound.

First, the appearance of the terminator 1 will be described. The plug frame 20 is a portion to be inserted into the slot 51 of the terminal 50. The plug frame 20 is made of, for example, polybutylene terephthalate (PBT). In this case, an increase in the cost of the material of the plug frame 20 can be reduced. The plug frame 20 has a small-diameter portion 21 and a large-diameter portion 22 located between the small-diameter portion 21 and the housing 30. For example, a cross section of the plug frame 20 when cut along a plane orthogonal to the first direction D1 has an elliptic shape. The plug frame 20 has a transition portion 23 located between the small-diameter portion 21 and the large-diameter portion 22. In the transition portion 23, an outer diameter of the plug frame 20 increases from the small-diameter portion 21 toward the large-diameter portion 22. The large-diameter portion 22 has a hole 22b for engaging the housing 30 with the plug frame 20.

A part of the housing 30 is inserted into the slot 51 of the terminal 50. A part of the housing 30 extends in a state that protrudes from the terminal 50. The housing 30 is made of, for example, polyphenylene ether (PPE). In this case, the weather resistance of the housing 30 can be enhanced. The housing 30 includes an inserted portion 31 inserted into the slot 51 of the terminal 50 and an exposed portion 32 exposed from the terminal 50 in a state where the inserted portion 31 is inserted into the slot 51. The inserted portion 31 has a first portion 31b adjacent to the plug frame 20 and a second portion 31c located opposite to the plug frame 20 in the first direction D1 when viewed from the first portion 31b. For example, the first portion 31b has a curved shape. As an example, the first portion 31b has a spherical shape.

The second portion 31c has a curved surface portion 31d and a recessed surface portion 31f. The second portion 31c has a pair of curved surface portions 31d arranged along a second direction D2 intersecting the first direction D1. The second portion 31c has a pair of recessed surface portions 31f arranged along a third direction D3 intersecting both the first direction D1 and the second direction D2. For example, the curved surface portion 31d has an arc shape when viewed along the first direction D1. The recessed surface portion 31f extends in both the first direction D1 and the second direction D2. For example, the recessed surface portion 31f is substantially flat.

The second portion 31c has a protruding portion 35 protruding from the recessed surface portion 31f. For example, the protruding portion 35 has two first side surfaces 35b extending in both the first direction D1 and the third direction D3, a second side surface 35c facing the terminal 50 and extending in both the second direction D2 and the third direction D3, and a third side surface 35d facing away from the second side surface 35c. The protruding portion 35 has two bent surfaces 35f that are curved so as to bulge outward of the protruding portion 35 when viewed along the third direction D3 between the first side surfaces 35b and the second side surface 35c.

The inserted portion 31 has a third portion 31g located opposite to the plug frame 20 in the first direction D1 when viewed from the second portion 31c. A cross section of the third portion 31g cut along a plane orthogonal to the first direction D1 has, for example, a circular shape. The third portion 31g has an attachment portion 31h to which an O-ring 33 is attached, which is in close contact with an inner surface 51b that defines the slot 51 of the terminal 50 (see FIG. 6), a small-diameter portion 31j located opposite to the plug frame 20 in the first direction D1 when viewed from the attachment portion 31h, and a large-diameter portion 31k located between the small-diameter portion 31j and the exposed portion 32.

For example, an outer diameter of the attachment portion 31h is larger than an outer diameter of the small-diameter portion 31j. The attachment portion 31h has a recessed portion 31p into which the O-ring 33 enters. For example, the large-diameter portion 31k has a columnar portion 31q adjacent to the exposed portion 32 and a tapered portion 31r located between the small-diameter portion 31j and the columnar portion 31q. A diameter of the tapered portion 31r increases from the small-diameter portion 31j toward the columnar portion 31q.

The exposed portion 32 has a small-diameter portion 32b extending from the inserted portion 31 and a large-diameter portion 32c located opposite to the inserted portion 31 in the first direction D1 when viewed from the small-diameter portion 32b. The small-diameter portion 32b is a recess to be pinched by a tool for inserting the terminator 1 into the terminal 50. The terminator 1 is inserted into the terminal 50 using a tool that pinches the small-diameter portion 32b. Further, the exposed portion 32 has a reduced-diameter portion 32d that decreases in diameter with distance from the large-diameter portion 32c, a rod-shaped portion 32f that extends in the first direction D1, and an increased-diameter portion 32g that is located opposite to the reduced-diameter portion 32d in the first direction D1 when viewed from the rod-shaped portion 32f. The rod-shaped portion 32f is located between the reduced-diameter portion 32d and the increased-diameter portion 32g.

The rod-shaped portion 32f has a finger contact portion 32h to which a finger of an operator who performs an operation of inserting the terminator 1 into the terminal 50 is brought into contact. The finger contact portion 32h has a function as a mark indicating a portion to which the finger is brought into contact. For example, the finger contact portion 32h has a recessed shape. The finger contact portion 32h is recessed in an oval shape having a long axis extending in the first direction D1, for example, when viewed along the second direction D2. For example, the direction in which the finger contact portion 32h is recessed is opposite to the direction in which the protruding portion 35 described above protrudes. The finger contact portion 32h will be described in detail later.

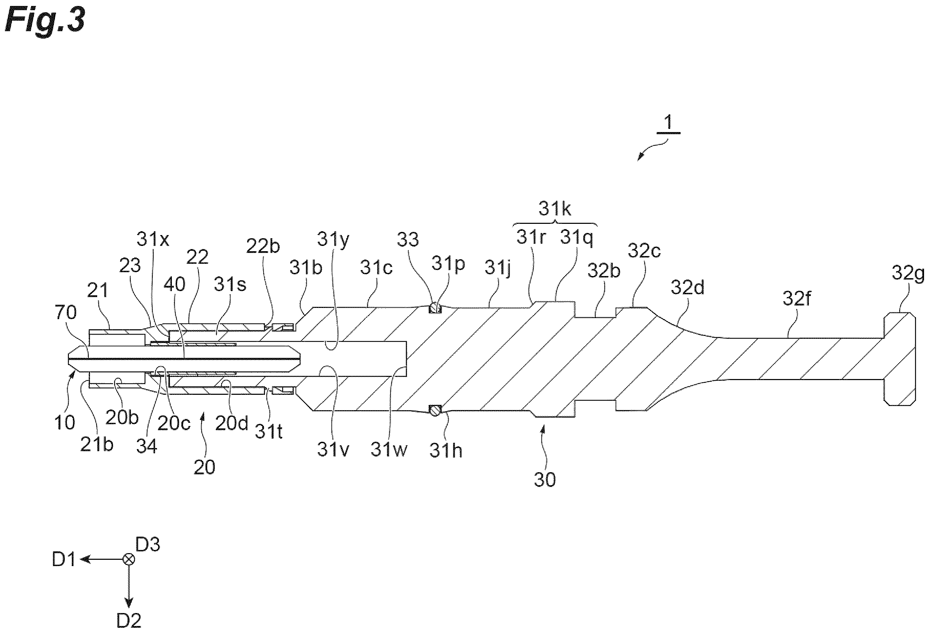

FIG. 3 is a cross-sectional view taken along the line A-A of FIG. 2. As shown in FIG. 3, the plug frame 20 is substantially tube. The plug frame 20 has a first internal space 20b located inside the small-diameter portion 21, a second internal space 20c located inside the transition portion 23, and a third internal space 20d located inside the large-diameter portion 22. For example, an inner diameter of the first internal space 20b is larger than an inner diameter of the second internal space 20c and smaller than an inner diameter of the third internal space 20d.

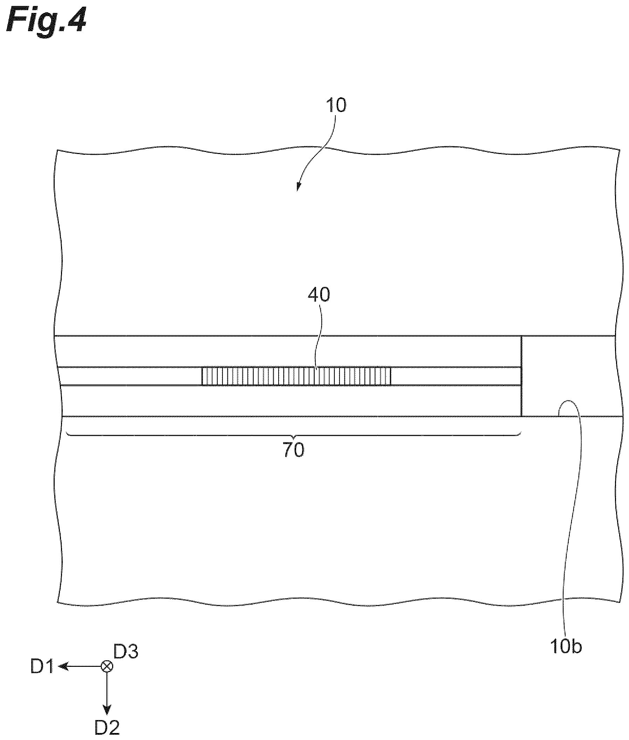

For example, the terminator 1 has a tubular portion 34 into which the ferrule 10 is inserted. The ferrule 10 is fixed to the inside of the plug frame 20 through the tubular portion 34. In the first internal space 20b, the ferrule 10 extends in the first direction D1. FIG. 4 is an enlarged view of the inside of the ferrule 10. As shown in FIGS. 3 and 4, a through hole 10b is formed inside the ferrule 10 along the central axis of the ferrule 10. A glass optical fiber 70 is disposed in the through hole 10b. The terminator 1 has a filter 40 optically connected to the optical fiber 60 disposed in the slot 51 of the terminal 50 in a state of being connected to the terminal 50. The filter 40 receives light from the optical fiber 60. The filter 40 is, for example, an optical fiber Bragg grating (FBG). The FBG is a filter in which the refractive index of the core of the optical fiber is periodically changed in the longitudinal direction of the optical fiber. For example, the filter 40, which is the FBG, is formed in a middle portion of the glass optical fiber 70 in the longitudinal direction. The glass optical fiber 70 including the filter 40, which is the FBG, is fixed to the through hole 10b of the ferrule 10. An end portion of the ferrule 10 in the first direction D1 protrudes from an end surface 21b of the small-diameter portion 21. An end portion of the glass optical fiber 70 reaches the end portion of the ferrule 10 in the first direction D1. In the second internal space 20c, the tubular portion 34 extends in the first direction D1.

The housing 30 has a cylindrical inserted portion 31s inserted into the plug frame 20. The inserted portion 31s has an internal space 31v. In the present embodiment, the internal space 31v of the housing 30 does not extend through. The internal space 31v is defined by a bottom surface 31w extending in both the second direction D2 and the third direction D3, and an inner peripheral surface 31y extending in the first direction D1 from the bottom surface 31w to an end surface 31x of the housing 30. The bottom surface 31w is a terminal end of an optical path of the terminator 1.

A part of the ferrule 10 and a part of the tubular portion 34 are accommodated in the internal space 31v of the inserted portion 31s. As the optical connector, there is known an optical connector in which a spring for urging the ferrule 10 in the first direction D1 is incorporated. In contrast, the terminator 1 according to the present embodiment does not incorporate the spring for urging the ferrule 10. Thus, in the terminator 1, since the spring for urging the ferrule 10 can be omitted, the cost of components can be reduced.

The inserted portion 31s is inserted into the third internal space 20d of the large-diameter portion 22 of the plug frame 20. Since the plug frame 20 includes the large-diameter portion 22, the thickness of a portion of the plug frame 20 into which the inserted portion 31s is inserted can be increased, and thus the strength of the plug frame 20 can be increased. The inserted portion 31s has a protrusion 31t that engages with the plug frame 20. The protrusion 31t is fitted from the inside of the large-diameter portion 22 into the hole 22b described above.

In a state where the terminator 1 is connected to the terminal 50, the end portion of the ferrule 10 in the first direction D1 is in contact with an end portion of the optical fiber 60 disposed in the slot 51 of the terminal 50. At this time, the glass optical fiber 70 is optically connected to the optical fiber 60 (see FIG. 6). Thus, the light transmitted through the optical fiber 60 is incident on the filter 40. The filter 40 reflects light in a wavelength range including a specific wavelength and transmit light outside the wavelength range among light from the optical fiber 60. That is, the filter 40 returns light in the wavelength range among light from the optical fiber 60 to the optical fiber 60 (left side in FIG. 3, emitted in a positive direction indicated by an arrow of the first direction D1), and transmits light outside the wavelength range among light from the optical fiber 60 in a direction opposite to the optical fiber 60 (right side in FIG. 3, emitted in a negative direction of the first direction D1). The light transmitted through the filter 40 is scattered in the internal space 31v of the inserted portion 31. The term "transmit" means that the transmittance is 5% or more.

The wavelength range of the light reflected from the filter 40 is, for example, 1625 nm to 1675 nm. In this case, the wavelength range is a wavelength band of the U band. The reflectance of light by the filter 40 is, for example, 80% or more. The reflectance of the filter 40 is a value obtained by dividing the reflected power of light by the incident power of light. Further, the return loss of the filter 40 is calculated by the following equation.

Return loss (dB) = -10 $\times$ Log$_{10}$(reflected power of light/incident power of light)

When the return loss is 10 (dB), from the above equation,

Logl0(reflected power of light/incident power of light) =-1.0, where,
(reflected power of light/incident power of light) = 0.10, and thus a reflectance is to become 10%.

When the return loss is 1.0 (dB), from the above equation,

Logl0(reflected power of light/incident power of light) = -0.10, where,
(reflected power of light/incident power of light) $\approx$ 0.79, and thus a reflectance is to become about 79%. It is noted that, the "Log10 (reflected power of light/incident power of light)" is a common logarithm of a value of (reflected power of light/incident power of light) with 10 as a base.

In the case of reflection (Fresnel reflection) of light from the inside of the glass passing through the end surface into the air, the return loss is 14.7 (dB), and the reflectance is to become about 3%. When the reflectance of the filter 40 is greater than about 3%, it can be easily determined that the optical path to the filter 40 is sound. For example, as a method of checking the state of an optical path formed of a glass optical fiber, there is a method of determining the state of the optical path by causing observation light to enter the optical path from a first end portion and observing the state of reflected light from a second end portion. In this case, when the observation light reaches the filter 40, reflected light having an intensity corresponding to the reflectance of the filter 40 is observed. On the other hand, for example, when a disconnection occurs in the middle of the optical path, Fresnel reflection occurs at the portion, and the intensity of the reflected light also corresponds to the disconnection. When the reflectance of the filter 40 is greater than the reflectance of the Fresnel reflection, it is possible to distinguish between the two. In this manner, it is possible to determine whether or not an abnormality such as a disconnection occurs in the middle of the optical path, that is, whether or not the optical path is sound. Thus, the reflectance of the filter 40 may be about 79% or more, and the return loss may be 1.0 dB or less.

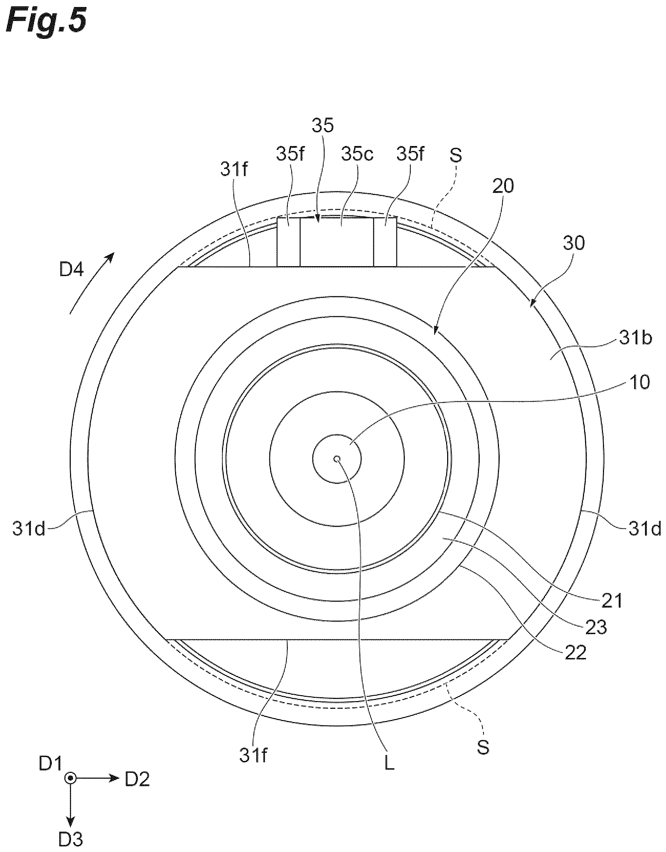

FIG. 5 is a front view of the terminator 1 as viewed from the side to be inserted to the terminal 50 in the negative direction of the first direction D1. FIG. 6 is a diagram for explaining insertion of the terminator 1 into the terminal 50. In an optical connection structure 100 according to the embodiment, the terminator 1 and the terminal 50 are optically connected. As described above, the housing 30 has the curved surface portion 31d and the recessed surface portion 31f. The curved surface portion 31d has an arc shape when viewed along the first direction D1 of the terminator 1. The recessed surface portion 31f is recessed with respect to a virtual extension surface S extending along the curved surface portion 31d when viewed along the first direction D1. The housing 30 has the pair of recessed surface portions 31f and, for example, the protruding portion 35 protrudes from one recessed surface portion 31f in the third direction D3.

The terminator 1 is inserted into the slot 51 in a state where the position in a rotation direction D4 relative to the terminal 50 is adjusted. The rotation direction D4 indicates a direction in which the terminator 1 rotates about an axis L that passes through the center of the terminator 1 and extends in the first direction D1. When the terminator 1 rotates in the rotation direction D4, the direction from the axis L to the protruding portion 35 changes. The protruding portion 35 enters the slot 51 of the terminal 50 when the position of the terminator 1 in the rotation direction D4 with respect to the terminal 50 is the insertable position. The term "enter a slot" indicates that the terminator 1 is sufficiently inserted into the terminal 50 and the terminator 1 is connected to the terminal 50. The term "insertable position" indicates a position of the terminator 1 in the rotation direction D4 where the protruding portion 35 can enter the slot 51. The protruding portion 35 abuts against an inner wall 52 formed inside the slot 51 when the position of the terminator 1 in the rotation direction D4 with respect to the terminal 50 is a position other than the insertable position, and does not enter the slot 51. That is, the inner wall 52 is configured to inhibit the terminator 1 from being inserted. The inner wall 52 is formed at all positions in the rotation direction D4 except for the position where the terminator 1 can be inserted. In FIG. 6, only the inner wall 52 at a position facing a protrusion 53 is shown.

The terminal 50 has the protrusion 53 formed inside the slot 51. The protrusion 53 is configured to allow the terminator 1 to be inserted. The protrusion 53 is configured to be movable in the radial direction of the slot 51. That is, the protrusion 53 is configured to be movable in a direction (upward in FIG. 6) approaching the terminator 1 inserted into the slot 51 and in a direction (downward in FIG. 6) away from the terminator 1. The protrusion 53 is urged by a spring toward the center of the slot 51 in the radial direction. The protrusion 53 is urged by the spring in a direction toward the terminator 1 inserted into the slot 51, for example. The protruding portion 35 rides over the protrusion 53 when entering the slot 51.

As a specific example, the position of the terminator 1 in the rotation direction D4 when the direction from the axis L to the protruding portion 35 is the downward direction is the insertable position. As described above, the housing 30 has the finger contact portion 32h, and the finger contact portion 32h causes the position of the terminator 1 in the rotation direction D4 to be the insertable position in a state in which the finger is in contact with the finger contact portion 32h. In the example of FIG. 6, a direction from the axis L to the finger contact portion 32h is opposite to a direction from the axis L to the protruding portion 35. A direction in which the protruding portion 35 protrudes and a direction in which the finger contact portion 32h is recessed are same directions. When the finger is placed on the finger contact portion 32h facing upward, the protruding portion 35 faces downward, and the position of the terminator 1 in the rotation direction D4 becomes the insertable position. In this case, for example, the terminator 1 can be naturally set to the insertable position by placing a thumb on the finger contact portion 32h from above.

When the terminator 1 is inserted into the slot 51 of the terminal 50 in a state where the terminator 1 is at the insertable position, the first portion 31b of the inserted portion 31 abuts against the protrusion 53, and the protrusion 53 moves downward. Then, the protruding portion 35 abuts against the protrusion 53, whereby the protrusion 53 moves further downward, and the protruding portion 35 rides over the protrusion 53. As a result, the protruding portion 35 is engaged with the protrusion 53, and the terminator 1 is connected to the terminal 50, thereby completing the optical connection structure 100.

On the other hand, the position of the terminator 1 in the rotation direction D4 when the direction from the axis L to the protruding portion 35 is other than the downward direction is not the insertable position. In this state, when the terminator 1 is inserted into the slot 51 of the terminal 50, the protruding portion 35 abuts against the inner wall 52 formed inside the slot 51. Thus, when the position of the terminator 1 in the rotation direction D4 is not the insertable position, the connection of the terminator 1 to the terminal 50 is prevented.

Next, the effects obtained from the terminator 1, the terminal 50, and the optical connection structure 100 will be described. The terminator 1 has the filter 40 held by the ferrule 10, and the filter 40 reflects light in a wavelength range including a specific wavelength toward the optical fiber 60 disposed in advance in the terminal 50. The ferrule 10 is enclosed in the plug frame 20, and the housing 30 is coupled to the plug frame 20. The housing 30 has the protruding portion 35. The protruding portion 35 enters the slot 51 of the terminal 50 when the position of the terminator 1 in the rotation direction D4 with respect to the terminal 50 is the insertable position. The protruding portion 35 abuts against the inner wall 52 formed inside the slot 51 when the position of the terminator 1 in the rotation direction D4 with respect to the terminal 50 is not the insertable position. Thus, the protruding portion 35 can have a function as a key for determining the rotational position of the terminator 1 with respect to the terminal 50.

The protruding portion 35 rides over the protrusion 53 formed inside the slot 51 when entering the slot 51. The terminator 1 engages with the terminal 50 by the protruding portion 35 riding over the protrusion 53. Thus, the protruding portion 35 can have a function as a lock for preventing the terminator 1 from coming off the terminal 50. As described above, since the protruding portion 35 of the housing 30 can have the function as the key and the function as the lock, it is not necessary to separately provide mechanisms for the key and a mechanism for the lock. Thus, the configuration can be simplified.

As described above, the housing 30 may have the curved surface portion 31d having an arc shape when viewed along the longitudinal direction of the terminator 1, and the recessed surface portion 31f recessed with respect to the virtual extension surface S extending along the curved surface portion 31d when viewed along the longitudinal direction. The protruding portion 35 may protrude from the recessed surface portion 31f. In this case, the protruding portion 35 protrudes from the recessed surface portion 31f of the housing 30, thereby reducing the volume of the housing 30. Thus, the size can be reduced, and the cost of materials or the like can be reduced.

As described above, the plug frame 20 may have an elliptic shape when viewed along the longitudinal direction of the terminator 1. In this case, the rotational position of the plug frame 20 with respect to the terminal 50 can be easily identified.

As described above, the housing 30 may have the finger contact portion 32h to which the finger is brought into contact. The finger contact portion 32h may cause the position of the terminator 1 in the rotation direction D4 with respect to the terminal 50 to be the insertable position in a state in which the finger is in contact with the finger contact portion 32h. In this case, when the finger is in contact with the finger contact portion 32h, the position of the terminator 1 in the rotation direction D4 with respect to the terminal 50 becomes the insertable position. Thus, the terminator 1 can be easily inserted into the terminal 50.

The embodiments of the terminator, the terminal, and the optical connection structure according to the present disclosure have been described above. However, the present disclosure is not limited to the embodiments described above. That is, it is easily recognized by those skilled in the art that the present disclosure can be modified and changed in various ways within the scope of the gist described in the claims. For example, the shape, size, material, number, and arrangement of each part of the terminator, the terminal, and the optical connection structure can be appropriately changed within the scope of the above gist. For example, in the above-described embodiment, an example in which the direction from the axis L to the finger contact portion 32h is opposite to the direction from the axis L to the protruding portion 35 has been described. However, the direction from the axis L to the finger contact portion is not limited to the above example, and can be changed as appropriate.

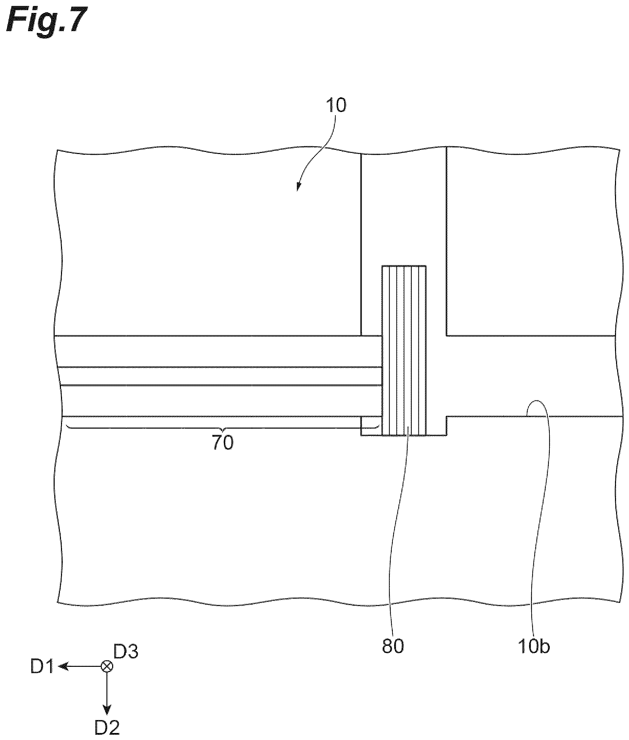

In the above-described embodiment, the terminator 1 including the filter 40 which is the FBG has been described. However, the filter included in the terminator may be one other than the FBG. FIG. 7 is a diagram showing a filter 80 of a terminator according to a modification. The filter 80 is a multilayer filter. The multilayer filter is substantially plate. The filter 80 is disposed in the through hole 10b of the ferrule 10 and is in contact with an end surface of the glass optical fiber 70. In this manner, a multilayer filter can be used as the filter.

### REFERENCE SIGNS LIST

1 terminator
10 ferrule
10b through hole
20 plug frame
20b first internal space
20c second internal space
20d third internal space
21 small-diameter portion
21b end surface
22 large-diameter portion
22b hole
23 transition portion
30 housing
31 inserted portion
31b first portion
31c second portion
31d curved surface portion
31f recessed surface portion
31g third portion
31h attachment portion
31j small-diameter portion
31k large-diameter portion
31p recessed portion
31q columnar portion
31r tapered portion
31s inserted portion
31t protrusion
31v internal space
31w bottom surface
31x end surface
31y inner peripheral surface

32 exposed portion
32b small-diameter portion
32c large-diameter portion
32d reduced-diameter portion
32f rod-shaped portion
32g increased-diameter portion
32h finger contact portion
33 O-ring
34 tubular portion
35 protruding portion
35b first side surface
35c second side surface
35d third side surface
35f bent surface
40 filter
50 terminal
51 slot
51b inner surface
52 inner wall
53 protrusion
54 opening
60 optical fiber
70 glass optical fiber
80 filter
100 optical connection structure
L axis
S extension surface

## Claims

1.  A terminator configured to be inserted into a slot of a terminal and optically connected to an optical fiber disposed in the slot, the terminator comprising:

    a filter configured to reflect light in a wavelength range including a specific wavelength and transmit light outside the wavelength range among light from the optical fiber in a state of being inserted into the slot of the terminal;
    a ferrule holding the filter;
    a plug frame enclosing the ferrule; and
    a housing coupled to the plug frame,
    wherein the housing has a protruding portion,
    wherein the protruding portion enters the slot when a position of the terminator in a rotation direction with respect to the terminal is an insertable position, and abuts against an inner wall formed inside the slot when the position of the terminator in the rotation direction with respect to the terminal is a position other than the insertable position, and
    wherein the protruding portion rides over a protrusion formed inside the slot when entering the slot.

2.  The terminator according to claim 1,

    wherein the housing has a curved surface portion having an arc shape when viewed along a longitudinal direction of the terminator, and a recessed surface portion recessed with respect to a virtual extension surface extending along the curved surface portion when viewed along the longitudinal direction, and
    wherein the protruding portion protrudes from the recessed surface portion.

3.  The terminator according to claim 1 or 2, wherein the plug frame has an elliptic shape when viewed along a longitudinal direction of the terminator.

4.  The terminator according to any one of claims 1 to 3,

wherein the housing has a finger contact portion to which a finger is brought into contact, and
wherein the finger contact portion causes the position of the terminator in the rotation direction with respect to the terminal to be the insertable position in a state in which the finger is in contact with the finger contact portion.

5. The terminator according to claim 4, wherein a direction in which the protruding portion protrudes and a direction in which the finger contact portion is recessed are same directions.

6. The terminator according to any one of claims 1 to 5, wherein the filter is an optical fiber Bragg grating.

7. The terminator according to any one of claims 1 to 5, wherein the filter is a multilayer filter.

8. A terminal configured to be optically connected to a terminator, the terminal comprising:

an optical fiber configured to be optically connected to the terminator; and
a slot into which the terminator is inserted,
wherein the optical fiber is disposed inside the slot,
wherein an inner wall configured to inhibit the terminator from being inserted and a protrusion configured to allow the terminator to be inserted are formed inside the slot,
wherein the protrusion is movable in a radial direction of the slot, and
wherein the protrusion is urged by a spring toward a center of the slot in the radial direction.

9. An optical connection structure comprising:

the terminator according to any one of claims 1 to 7; and
the terminal according to claim 8 optically connected to the terminator.

Fig.1

# Fig.2

*Fig.3*

EP 4 667 989 A1

## Fig.4

# Fig.5

Fig.6

Fig.7

## INTERNATIONAL SEARCH REPORT

| International application No. |
|---|
| **PCT/JP2024/002292** |

**A.     CLASSIFICATION OF SUBJECT MATTER**

*G02B 6/36*(2006.01)i; *G02B 6/02*(2006.01)i; *G02B 6/26*(2006.01)i
FI:    G02B6/36; G02B6/02 421; G02B6/02 431; G02B6/26 311

According to International Patent Classification (IPC) or to both national classification and IPC

**B.     FIELDS SEARCHED**

Minimum documentation searched (classification system followed by classification symbols)

G02B6/02-6/08; G02B6/24; G02B6/255; G02B6/36-6/40; G02B6/44; H04B10/00-10/90; H04J14/00-14/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| Y | JP 2000-231029 A (SUMITOMO ELECTRIC INDUSTRIES, LTD.) 22 August 2000 (2000-08-22)<br>    paragraphs [0004], [0010]-[0025], fig. 1-4 | 1-9 |
| Y | WO 2016/174980 A1 (OLYMPUS CORPORATION) 03 November 2016 (2016-11-03)<br>    paragraphs [0010]-[0025], fig. 1-5 | 1-9 |
| Y | JP 2004-093922 A (NIPPON TELEGRAPH AND TELEPHONE CORPORATION) 25 March 2004 (2004-03-25)<br>    paragraphs [0029]-[0034], fig. 1, 2 | 2-7, 9 |
| Y | US 4812007 A (NORTHERN TELECOM LIMITED) 14 March 1989 (1989-03-14)<br>    column 4, lines 7-30, fig. 1, 3 | 3-7, 9 |
| A | US 2020/0103602 A1 (AMPHENOL CORPORATION) 02 April 2020 (2020-04-02)<br>    fig. 7 | 1-7 |

☐ Further documents are listed in the continuation of Box C.    ☑ See patent family annex.

| | |
|---|---|
| *     Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **14 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/002292**

| Patent document cited in search report | | | Publication date (day/month/year) | Patent family member(s) | | | Publication date (day/month/year) |
|---|---|---|---|---|---|---|---|
| JP | 2000-231029 | A | 22 August 2000 | (Family: none) | | | |
| WO | 2016/174980 | A1 | 03 November 2016 | US | 2017/0303772 | A1 | |
| | | | | paragraphs [0018]-[0033], fig. 1-5 | | | |
| | | | | EP | 3231353 | A1 | |
| | | | | CN | 107105998 | A | |
| JP | 2004-093922 | A | 25 March 2004 | (Family: none) | | | |
| US | 4812007 | A | 14 March 1989 | (Family: none) | | | |
| US | 2020/0103602 | A1 | 02 April 2020 | EP | 3629069 | A1 | |

Form PCT/ISA/210 (patent family annex) (July 2022)

**REFERENCES CITED IN THE DESCRIPTION**

**Patent documents cited in the description**

- JP 2023023493 A
- WO 2019005191 A
- WO 2019005194 A
- WO 2019005196 A